# EUROPÄISCHE PATENTSCHRIFT

(11) **EP 0 405 230 B1**
(45) Veröffentlichungstag und Bekanntmachung des Hinweises auf die Patenterteilung: **28.04.1993**
(21) Anmeldenummer: 90111163.3
(22) Anmeldetag: 13.06.1990
(51) Int. Cl.: B60P 3/12, B66F 9/18, B66F 7/00, B62B 3/06

(54) **Hebeeinrichtung zum Anheben von Fahrzeugen**
Lifting device for lifting vehicles
Dispositif de levage pour lever des véhicules

(30) Priorität: 28.06.1989 AT 1591/89
(43) Veröffentlichungstag der Anmeldung: 02.01.1991
(73) Patentinhaber: Kahlbacher, Anton, A-6370 Kitzbühel (AT)
(72) Erfinder: Pacher, Georg, A-6382 Kirchdorf (AT)
(74) Vertreter: Hefel, Herbert, Dipl.-Ing.

(56) Entgegenhaltungen:
- AT-B- 340 315
- CH-A- 438 044
- DE-A- 3 639 126
- DE-B- 1 010 912
- DE-B- 1 019 065
- GB-A- 1 032 654
- US-A- 2 733 825
- US-A- 4 473 334

## Beschreibung

Die Erfindung bezieht sich auf eine fahrbare Hebeeinrichtung zum Anheben von Fahrzeugen mit den Merkmalen des Oberbegriffes des Patentanspruches 1.

Aus der GB-A-1 028 320 ist eine fahrbare Hubeinrichtung bekannt, welche an einem heb- und senkbaren, als Parallelogrammlenker ausgebildeten Hebelwerk eine Plattform trägt. Diese Plattform zeigt über ihre Länge einen geknickten Verlauf, wobei der dem Hebelwerk abewandte Teil dieser Plattform in einer flachen Neigung nach unten gegen den Boden gerichtet ist, so daß dieser Teil bei abgesenkter Plattform als Auffahrrampe dient. Diese Einrichtung dient zum Heben von Rollwagen, welche auf diese rampenartige und abgesenkte Plattform aufgeschoben werden müssen, mit der sie dann angehoben werden können. Diese Einrichtung ist zum Anheben von Fahrzeugen jedoch nicht geeignet, denn das liegende Fahrzeug müßte beim Einsatz dieses vorbekannten Gerätes vorerst auf die rampenartige Plattform aufgeschoben oder aufgezogen werden.

Auch die US-A-4 692 082 ist in diesem Zusammenhang zu nennen, die einen im Grundriß U-förmigen Träger zeigt, der auf Rollen fahrbar gelagert ist, wobei mittels einer Handkurbel und einer Zahnstange der Abstand der freien, zueinander parallelen Schenkel dieses U-förmigen Trägers verstellbar ist. Diese Einrichtung wird mit ihrem offenen Ende von der Seite her unter ein Fahrzeugrad eingeschoben und durch Drehen der erwähnten Kurbel wird der Abstand der frei auskragenden Schenkel soweit verringert, daß das unterfahrene Rad angehoben wird.

Vor allem ist hier aber die gattungsgemäße Hebeeinrichtung nach der CH-A-438 044 zu nennen. Diese Hebeeinrichtung besitzt einen rahmenartigen Tragteil, der an einem heb- und senkbaren Ausleger um eine Horizontal- und eine Vertikalachse schwenkbar gelagert ist. Dieser rahmenartige Tragteil ist zweiteilig ausgebildet, wobei der eine portalartige Teil die in ihrer Längsrichtung verschiebbaren Tragschienen aufweist und dieser portalartige Tragteil quer zur Längserstreckung dieser Tragschienen am anderen Tragteil, der am Ausleger angelenkt ist, verschoben werden kann. Der rahmenartige Tragteil und die Tragschienen sind aus Rohren bzw. Kastenprofilen gefertigt und die gegeneinander verschiebbaren Teile teleskopartig ineinandergeführt. Das hier geoffenbarte Prinzip ist ohne Zweifel zweckmäßig, seine praktische Ausführung ist jedoch mit Mängel behaftet, da die Handhabung dieser Einrichtung umständlich ist, muß doch jede Verstellung manuell bewerkstelligt werden.

Eine vergleichbare Hebeeinrichtung, wenn auch in anderer konstruktiver Ausführung, ist aus der US-PS 4 473 334 bekannt, bei welcher wenigstens zur Verstellung einzelner Teile der Hebeeinrichtung Kolben-Zylindereinheiten vorgesehen sind.

Ausgehend von diesem Stand der Technik zielt die Erfindung darauf ab, eine fahrbare Hebeeinrichtung der eingangs genannten Art dahingehend weiterzuentwickeln, daß vor allem deren Handhabung im täglichen praktischen Einsatz vereinfacht wird, was gemäß der Erfindung durch jene Maßnahmen gelingt, die Inhalt und Gegenstand des kennzeichnenden Teiles des Patentanspruches 1 sind.

Der Tragteil inklusive der Gabelenden des Elektrohubwagens kann sehr niedrig gebaut werden, so daß die erfindungsgemäße Hebeeinrichtung problemlos unter jeden abgestellten Personenkraftwagen bzw. jedes abgestellte Fahrzeug gefahren werden kann. Da der Tragteil um eine vertikale Achse verdreht werden kann, kann auch das angehobene Fahrzeug gelenkt werden, so daß in relativ kleinen Radien das Fahrzeug verschiebbar ist. Damit bei einem entsprechenden Lenkeinschlag des Hubwagens der Tragteil ausreichend abgestützt ist, ist der Tragteil in radialem Abstand von seiner vertikalen Drehachse von an der bzw. den Gabel(n) angeordneten Rollenbahnen abgestützt.

Die Handhabung der Hebeeinrichtung wird noch weiterhin erleichtert durch eine selbsttätige Folgesteuerung der Betätigungseinrichtungen für die verstellbar gehaltenen Tragschienen, wobei nach dem Anstoßen der festen Tragschienen an den Rädern des zu hebenden Fahrzeuges die anderen Tragschienen ausfahrbar und nach dem Ausfahren bis zur Anlage an der Rückseite der Räder quer zu deren Längserstreckung gegen die ersteren Tragschienen verschiebbar sind. Diese automatische Folgesteuerung kann aber auch abgeändert werden, so daß vorerst nach dem Anfahren der festen Tragschienen der Abstand der verschiebbaren Tragschienen zu den festen eingestelt wird, worauf dann diese anderen Tragschienen ausgefahren werden. Es können nun die Hubgabeln angehoben werden, und das angehobene Fahrzeug ist beliebig manövrierbar und an beliebiger Stelle abstellbar.

Weitere erfindungsgemäße Merkmale und besondere Vorteile werden in der nachstehenden Beschreibung anhand der Zeichnungen noch näher erläutert.Es zeigen:

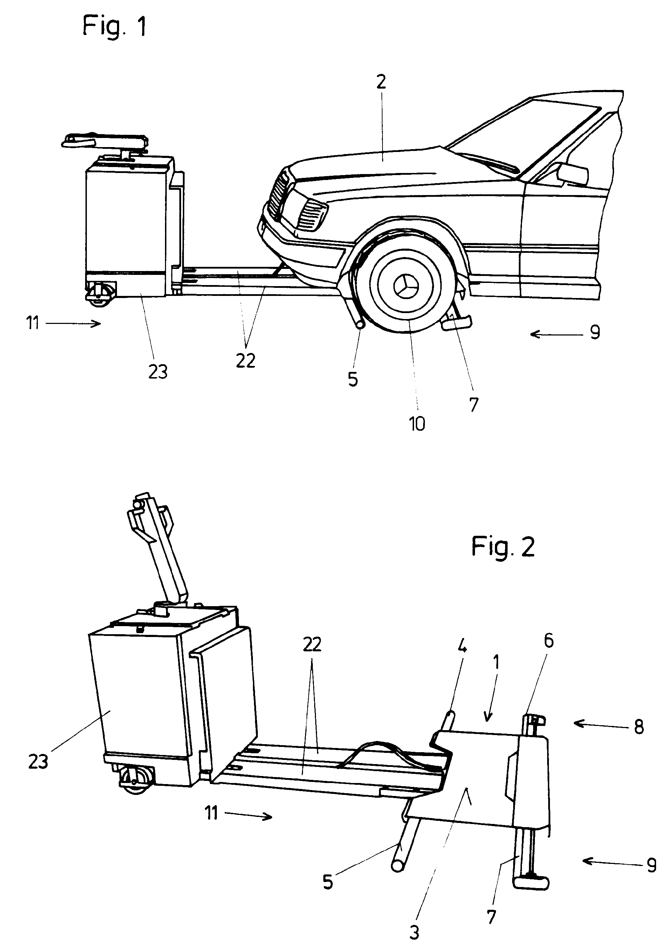

- Fig. 1: eine Schrägsicht einer Hebeeinrichtung in Einsatzstellung bei einem zu hebenden Fahrzeug; Fig. 2 die Hebeeinrichtung in einer Schrägsicht;
- Fig. 3: die am freien Ende der Gabeln eines Hubwagens angeordnete Hebeeinrichtung in einer Ansicht von unten.

Die Hebeeinrichtung 1 zum Anheben von Fahrzeugen 2 besteht im wesentlichen aus einem Tragteil 3 und parallel zueinander frei auskragenden Tragschienen 4, 5 und 6 , 7. Die Tragschienen 4, 6 bzw. 5, 7 sind zweckmäßig exakt parallel zueinander ausgerichtet, könnten aber auch einen spitzen Winkel miteinander einschließen. Die Tragschienen 4 und 6 sowie 5 und 7 bilden jeweils ein Tragschienenpaar, wobei diese beiden Tragschienenpaare 8 und 9 in spiegelbildlicher Anordnung von dem mittigen Tragteil 3 auskragen.

Jedes Tragschienenpaar 8, 9 ist zum Erfassen eines Rades 10 eines Räderpaares des anzuhebenden Fahrzeuges vorgesehen.

Die Tragschienen 6 und 7 sind in deren Längsrichtung ausschiebbar bzw. in den Tragteil 3 einziehbar, wobei in der strichlierten Darstellung die ausgeschobene Stellung gezeigt ist. Die in Fahrrichtung 11 zum anzuhebenden Fahrzeug 2 hin hinteren Tragschienen 4 und 5 sind fest am Tragteil 3 angeordnet. Es sind daher bei dem gezeigten Beispiel lediglich die in Fahrrichtung 11 zum Fahrzeug 2 hin vorderen Tragschienen 6 und 7 in deren Längsrichtung ausschiebbar bzw. in den Tragteil 3 einziehbar ausgeführt. Es wäre auch denkbar, zusätzlich die Tragschienen 4 und 5 ausschiebbar bzw. einziehbar auszuführen, doch ist dies für den Gebrauch der Hebeeinrichtung nicht erforderlich.

Die Tragschienen 6 und 7 sind in einer Halterung 12 angeordnet, welche über Führungszapfen 13 in Führungshülsen 14 am Tragteil 3 verschiebbar gehalten ist. Es sind dadurch die ausschiebbaren bzw. in den Tragteil 3 einziehbaren Tragschienen 6 und 7 quer zu deren Längserstreckung zur Veränderung des Abstandes A der jeweils ein Tragschienenpaar 8 bzw. 9 bildenden Tragschienen 4, 6 und 5, 7 möglich. Dadurch ist eine Einstellung auf verschiedene Radgrößen bzw. Reifengrößen des anzuhebenden Fahrzeuges möglich.

In vorteilhafter Weise erfolgt die Vor- und Rückbewegung der Tragschienen 6 und 7 und deren Querverstellung mittels einzelner Hydraulikzylinder 15, 16, 17, 18. Eine solche Verstellmöglichkeit ist insbesondere dann von Vorteil, wenn die Hebeeinrichtung 1 an einem Gabelhubwagen bzw. Gabelstapler angeordnet ist, welcher eine Elektro-Hydraulik-Anlage aufweist. Es wäre aber auch denkbar, bei entsprechenden Ausbildungen und Anordnungen am Gabelhubwagen oder Gabelstapler die Verstelleinrichtungen als Pneumatikzylinder oder als einzelne Elektroantriebe auszuführen.

Eine besonders einfache und wirkungsvolle Konstruktion ergibt sich dann, wenn jeder ausschiebbaren bzw. einziehbaren Tragschiene 6 bzw. 7 ein parallel seitlich neben dieser befestigter Hydraulikzylinder 15, 16 zugeordnet ist. Diese Hydraulikzylinder sind einerseits am Tragteil 3 bzw. an der am Tragteil 3 verschiebbaren Halterung 12 befestigt und andererseits greifen diese bzw. der Kolben dieser Hyraulikzylinder 15, 16 am freien Ende der ausschiebbaren bzw. einziehbaren Tragschienen 6 bzw. 7 an. Zu diesem Zweck kann ein entsprechender Verbindungsbügel 19, 20 vorgesehen werden.

Der Tragteil 3 ist um eine vertikale Achse 21 verdrehbar am freien Ende der Gabeln 22 eines verfahrbaren Hubwagens 23 angeordnet, so daß auch Lenkbewegungen zum Verfahren des angehobenen Fahrzeuges möglich sind.

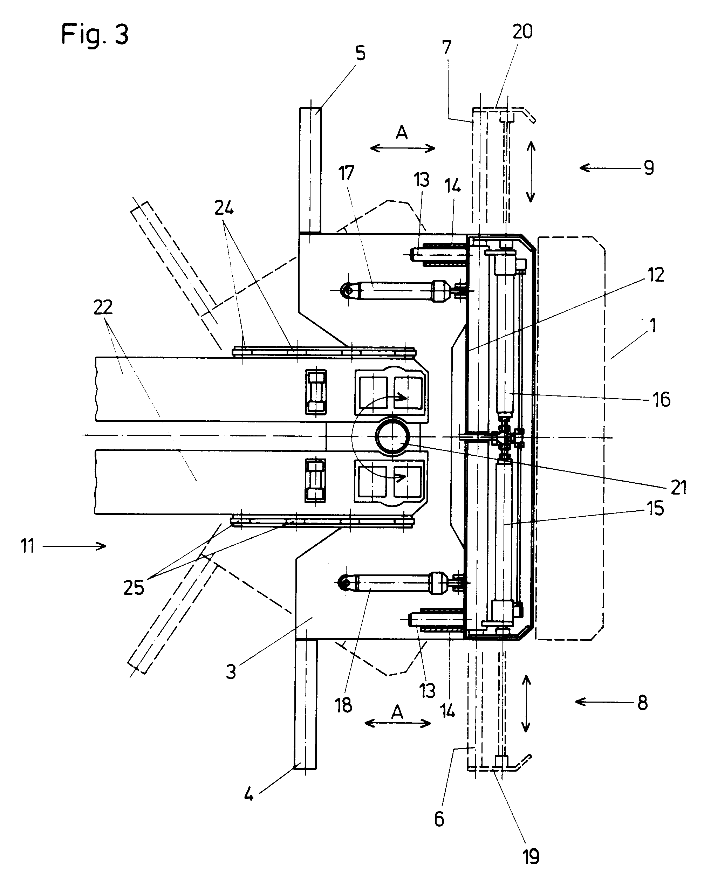

Damit auch bei einem entsprechenden Schwenkeinschlag des Tragteiles 3 gegenüber den Gabeln 22 eine ordnungsgemäße Abstützung des Tragteiles 3 gewährleistet ist, sind mit radialem Abstand von der vertikalen Drehachse 21 Rollenbahnen 24, 25 vorgesehen, auf welchen sich der Tragteil 3 abstützen kann. Die beiden Endverschwenklagen sind in Fig. 3 strichliert eingetragen.

Wenn nun die erfindungsgemäße Hebeeinrichtung eingesetzt werden soll, dann sind vorerst die Tragschienen 6 und 7 in der in den Tragteil 3 zurückgezogenen Stellung. Die Hebeeinrichtung wird zusammen mit dem Hubwagen 23 von der Frontseite oder auch von der Rückseite des Fahrzeuges 2 her unter das Fahrzeug eingeschoben, bis die beiden fest mit dem Tragteil 3 verbundenen Tragschienen 4 und 5 an den vorderen Begrenzungen der Räder 10 anliegen. In einer automatischen Folgesteuerung wird die Halterung 12 über die Hydraulikzylinder 17 und 18 nach vorne ausgefahren, damit der größte Abstand A zwischen den jeweiligen Tragschienen erzielt wird. Nun können die beiden Tragschienen 6 und 7 durch Betätigung der Hydraulikzylinder 15 und 16 in deren Längsrichtung ausgefahren werden. Nach Ende dieses Ausfahrvorganges wird dann automatisch die Halterung 12 durch Betätigung der beiden Hydraulikyzlinder 17 und 18 wiederum zurückgezogen, so daß sich der Abstand zwischen den beiden Tragschienen 4 und 6 bzw. 5 und 7 wiederum verringert. Diese Querverstellung der Tragschienen 6 und 7 erfolgt so weit, bis die Tragschienen 6 und 7 satt an den rückwärtigen Bereichen der Räder 10 anliegen. Die Hubgabeln 22 des Hubwagens 23 können nun angehoben werden und das angehobene Fahrzeug 2 ist beliebig manövrierbar und kann an beliebiger Stelle wiederum abgestellt werden.

Die automatische Folgesteuerung kann im Rahmen der Erfindung auf verschiedene Art und Weise durchgeführt werden. So wäre es auch denkbar, vorerst annähernd den Abstand A für eine entsprechende Radgröße einzustellen und dann die Tragschienen 6 und 7 auszufahren. Eine bessere Lösung ist jedoch die vorstehend beschriebene, weil dann die Tragschienen 6 und 7 noch mit Abstand von Rad 10 ausgefahren werden können und erst anschließend entsprechend satt angepreßt werden. Es ist dadurch auch keinerlei Beschädigungsmöglichkeit des anzuhebenden Fahrzeuges bzw. der Räder desselben gegeben.

## Patentansprüche

1. Fahrbare Hebeeinrichtung zum Anheben von Fahrzeugen, wobei in spiegelbildlicher Anordnung von einem mittigen Tragteil (3) aus nach zwei Seiten hin frei auskragende Tragschienenpaare (8, 9) zum Erfassen eines Räderpaares (10) eines Fahrzeuges (2) vorgesehen sind und die in Fahrrichtung (11) zum anzuhebenden Fahrzeug (2) hin hinteren Tragschienen (4, 5) fest am Tragteil (3) angeordnet sind und die in Fahrrichtung (11) zum Fahrzeug (2) hin vorderen Tragschienen (6, 7) in ihrer Längsrichtung gegenüber dem Tragteil (3) verschiebbar sind und die ausschiebbaren bzw. in den Tragteil (3) einziehbaren Tragschienen (6, 7) quer zu ihrer Längserstreckung zur Veränderung des Abstandes (A) der jeweils ein Tragschienenpaar (8, 9) bildenden Tragschienen (4, 6; 5, 7) verstellbar am Tragteil (3) gehalten sind, dadurch gekennzeichnet, daß zur Vor- und Rückbewegung der Tragschienen (6, 7) und zu deren Querverstellung einzelne Hydraulik- bzw. Pneumatikzylinder (15, 16, 17, 18) oder einzelne Elektro-Antriebe vorgesehen sind und jeder verschiebbaren Tragschiene (6, 7) ein parallel seitlich neben dieser befestigter Hydraulikzylinder (15, 16) zugeordnet ist, der einerseits am Tragteil (3) und andererseits am frei auskragenden Ende der Tragschiene (6, 7) angreift und der Tragteil (3) in an sich bekannter Weise um eine vertikale Achse (21) verdrehbar am freien Ende der Gabel(n) (22) eines verfahrbaren Hubwagens (23) angeordnet ist, wobei der Tragteil (3) mit radialem Abstand von dessen vertikaler Drehachse (21) von an der bzw. den Gabel(n) (22) angeordneten Rollenbahnen (24, 25) abgestützt ist.

2. Hebeeinrichtung nach Anspruch 1, gekennzeichnet durch eine selbsttätige Folgesteuerung der Betätigungseinrichtungen für die verstellbar gehaltenen Tragschienen (6, 7), wobei nach dem Anstoßen der festen Tragschienen (4, 5) an den Rädern (10) des zu hebenden Fahrzeuges (2) die anderen Tragschienen (6, 7) ausfahrbar und nach dem Ausfahren bis zur Anlage an der Rückseite der Räder (10) quer zu deren Längserstreckung gegen die ersteren Tragschienen (4, 5) verschiebbar sind.

## Claims

1. A moble lifting device for lifting vehicles, wherein pairs of support rails (8, 9) freely projecting on two sides from a central support part (3) in a mirror-image arrangement are provided for engaging one pair of wheels (10) of a vehicle (2), and the support rails (4, 5) disposed at the rear in the direction of movement (11) towards the vehicle (2) to be raised are securely mounted on the support part (3) and the support rails (6, 7) disposed at the front in the direction of movement (11) towards the vehicle (2) are displaceable in their longitudinal direction with respect to the support part (3), and the support rails (6, 7) which can be extended from or retracted into the support part (3) are mounted adjustably on the support part (3) transversely to their longitudinal extension for varying the distance apart (A) of the support rails (4, 6; 5, 7) respectively forming one pair of support rails (8, 9), characterised in that individual hydraulic or pneumatic cylinders (15, 16, 17, 18) or individual electric drives are provided for forward and rearward movement of the support rails (6, 7) and for their transverse adjustment, and each displaceable support rail (6, 7) is associated with a hydraulic cylinder (15, 16) mounted parallel, laterally and close with respect thereto, which hydraulic cylinder (15, 16) engages, on the one hand, on the support part (3) and, on the other hand, on the freely projecting end of the support rail (6, 7), and the support part (3) is mounted, in a manner known per se, so as to be rotatable about a vertical axis (21) at the free end of the fork(s) (22) of a mobile lift truck (23), wherein the support part (3) is supported, at a radial distance from its vertical pivot axis (21), on roller tracks (24, 25) mounted on the fork or forks (22).

2. A lifting device according to Claim 1, characterised by automatic sequential control of the actuating devices for the adjustably mounted support rails (6, 7), and, after the fixed support rails (4, 5) abut against the wheels (10) of the vehicle (2) to be raised, the other support rails (6, 7) can be extended out and after being extended out until they abut against the rear side of the wheels (10) they can be displaced transversely to their longitudinal extension towards the first support rails (4, 5).

## Revendications

1. Dispositif élévateur mobile, pour soulever des véhicules, dans lequel on a prévu en disposition symétrique une paire de barres support (8, 9) en saillie libre depuis une plaque support (3) centrale vers les deux côtés, couple destiné à saisir une paire de roues (10) d'un véhicule (2), dispositif dans lequel on a monté de façon fixe sur la plaque support (3) des barres support (4, 5) arrière dans le sens d'avancement (11) pour le véhicule (2) à soulever et les barres support avant (6, 7) dans le sens d'avancement (11) vers le véhicule (2) peuvent coulisser dans leur sens longitudinal par rapport à la plaque support (3) et les barres support (6, 7) pouvant être sorties de la plaque support (3) par coulissement ou rentrées dans celle-ci sont réglables sur la plaque support (3) transversalement à leur développement longitudinal pour modifier la distance (A) des barres support (4, 6 ; 5, 7) constituant chaque fois une paire de barres support (8, 9), dispositif caractérisé en ce que pour assurer le mouvement en avant et en arrière des barres support (6, 7) et pour leur réglage transversal sont prévus des vérins individuels hydrauliques ou pneumatiques (15, 16, 17, 18) ou des commandes électriques individuelles et à chacune des barres support pouvant coulisser (6, 7) est associé un vérin hydraulique (15, 16) fixé latéralement et parallèlement près de celles-ci , qui est appliqué d'une part à la plaque support (3) et d'autre part à l'extrémité saillante librement des barres support (6, 7) et la plaque support (3) est disposée d'une manière connue avec pivotement possible autour d'un axe vertical (21) à l'extrémité libre de la(les) fourche(s) (22) d'un chariot élévateur mobile (23), la plaque support (3) étant supportée à une certaine distance radiale de son axe de rotation vertical (21) par des transporteurs à rouleaux (24, 25) disposés sur la ou les fourche(s) (22).

2. Dispositif élévateur selon la revendication 1, caractérisé par un automatisme séquentiel des dispositifs de commande pour les barres support (6, 7) réglables, grâce auquel après l'appui des barres support fixes (4, 5) sur les roues (10) du véhicule à soulever, les autres barres support (6, 7) peuvent être déployées et après déploiement jusqu'à la position contre la face arrière des roues (10), elles peuvent être déplacées transversalement à leur développement longitudinal en direction des premières barres support (4, 5).
